# EUROPÄISCHE PATENTSCHRIFT

(11) **EP 2 044 356 B1**
(45) Veröffentlichungstag und Bekanntmachung des Hinweises auf die Patenterteilung: **07.03.2012**
(21) Anmeldenummer: 07725619.6
(22) Anmeldetag: 29.05.2007
(51) Int. Cl.: F16L 1/09, F16L 1/10, B23K 37/053

(54) **VORRICHTUNG UND VERFAHREN ZUM EINBINDEN VON ROHRLEITUNGEN IN ROHRLEITUNGSTRANSPORTSYSTEME**
DEVICE AND METHOD FOR INCORPORATING PIPELINES INTO PIPELINE TRANSPORT SYSTEMS
DISPOSITIF ET PROCÉDÉ D'INTÉGRATION DE CONDUITES DANS DES SYSTÈMES DE TRANSPORT PAR CANALISATION

(30) Priorität: 02.06.2006 DE 102006026334
(43) Veröffentlichungstag der Anmeldung: 08.04.2009
(73) Patentinhaber: Open Grid Europe GmbH, 45141 Essen (DE); BP EXPLORATION OPERATING COMPANY LIMITED, Sunbury-on-Thames, Middlesex TW16 7BP (GB)
(72) Erfinder: SCHWENGLER, Peter, 47661 Issum (DE); FREETH, Graham, Ashford, Middlesex TW15 2SP (GB); COOPER, Nicholas, Whiston, Rotherham S60 4HQ (GB)
(74) Vertreter: Harlacher, Mechthild
(86) Internationale Anmeldenummer: PCT/EP2007/004725
(87) Internationale Veröffentlichungsnummer: WO 2007/140899

(56) Entgegenhaltungen:
- WO-A-01/34340
- WO-A-2005/061936
- JP-A- 58 112 681
- NL-A- 9 101 780
- US-A- 3 828 413
- US-A- 4 060 190
- US-A- 4 145 593

## Beschreibung

Die vorliegende Erfindung betrifft das Gebiet des Verlegens und der Verbindung von Rohrleitungen. Insbesondere betrifft die Erfindung das Gebiet des Einbindens (Tie-In) von Rohrleitungssektionen mit großen Nennweiten in Rohrleitungstransportsysteme.

Aus der WO 2005 /061936 A1, der WO 01/34340 A und der US 3 828 413 A sind Vorrichtungen zum Einbinden von Rohrleitungen in ein erd-oder wasserverlegtes Rohrleitungssystem bekannt, mit zwei ersten Schellen, die jeweils aus mehreren gekoppelten Umfangssektionen bestehen, wobei die Umfangssektionen zum vollumfänglichen Umgreifen einer Rohrleitung gegeneinander bewegbar sind, wobei an jeder der beiden Schellen Klemmmittel angeordnet sind, zum Einklemmen einer Rohrleitung an Klemmstellen entlang einer Umfangslinie des Rohres, wobei mit einer Schelle ein Werkzeugträger gekoppelt sein kann, mit wenigstens zwei Holmen, die sich mindestens teilweise zwischen den ersten Schellen erstrecken und an denen die Schellen axial bewegbar gehalten sind, mit Hydraulikmitteln zum Bewegen der Schellen in axialer Richtung der Holme.

Die WO 01/34340 A beschreibt eine Vorrichtung und ein Verfahren zum Verschweißen von Rohren. Die Vorrichtung weist ein schalenförmiges Gestell mit zwei Schellen auf. Die Schellen bestehen jeweils aus mehreren gekoppelten Umfangssektionen, wobei die Umfangssektionen zum vollumfänglichen Umgreifen einer Rohrleitung gegeneinander bewegbar sind. An beiden Schellen sind Klemmmittel zum Einklemmen einer Rohrleitung an Klemmstellen entlang einer Umfangslinie des Rohres angeordnet. Die beiden Schellen sind miteinander verbunden und haben einen geringen Abstand zueinander, der nur in einem engen Bereich geändert werden kann. Das schalenförmiges Gestell kann mittels Rollen auf den Rohrleitungen in axialer Richtung bewegt werden.

Eine aus der US 4060190 A bekannte Vorrichtung weist Holme 1 auf, an denen Platten 3 und 3a gehalten werden, die mittels Spannvorrichtungen, wie Kraftzylindern 14 und 14a mit Rohrelementen 10 und 11 verbunden werden und die axial beweglich sind, um die geklemmten Rohrelemente 10 und 11 gegeneinander bewegen zu können. Zwischen den ersten Schellen ist ein Spannfutter angeordnet, das aus zwei Rohrhälften 4, 4a gebildet wird, die mittels Antrieben 5, 5a mit einem Rohrzwischenstück verbunden werden. Die Platten 3, 3a weisen Aussparungen auf, durch die die Rohrelemente 10 und 11 vor dem Einbindeprozess hindurchgeschoben werden müssen. Die bekannte Vorrichtung weist einen starren Rahmen mit Streben 17 und Standteilen 18 auf, der mittels Fußplatten 16 bzw. 16a auf den Boden aufgestellt wird. Die Vorrichtung ist zum Aneinanderbringen und Verbinden von zwei sich dicht gegenüberstehende oder sich überlappenden Rohrenden eines verlegten Rohrleitungssystems insbesondere eines Gas-Fernleitungssystems in einer schlecht zugänglichen Baugrube nicht geeignet, weil die Rohrelemente nicht durch Aussparungen in den Platten 3, 3a geschoben werden können.

Das Dokument US 4060190 A offenbart damit eine Vorrichtung zum Einbinden von Rohrleitungen in ein erd-oder wasserverlegtes Rohrleitungstransportsystem mit zwei Platten, wobei an jeder der Platten Klemmmittel angeordnet sind, zum Einklemmen einer Rohrleitung an Klemmstellen entlang einer Umfangslinie des Rohres, mit wenigstens zwei Holmen, die sich zwischen den Platten erstrecken und an denen die Platten axial bewegbar gehalten sind, und Hydraulikmitteln, welche mit den Platten und den Holmen zum Bewegen der ersten Schellen in axialer Richtung der Holme gekoppelt sind, und mit weiteren Schellen, die zwischen den Platten an wenigstens zwei der Holme gehalten sind, wobei an den Schellen Klemmmittel zum Einklemmen einer umgriffenen Rohrleitung angeordnet sind.

Beim Verlegen und der Montage von erd- oder wasserverlegten Rohrleitungen werden einzelne Rohrleitungsabschnitte Länge axial hintereinander verlegt und endseitig miteinander verbunden. Unter dem Begriff "Einbinden" ("Tie-In") wird allgemein sowohl ein Aneinanderbringen und Verbinden von unverbundenen Abschnitten eines Leitungssystems verstanden, als auch ein Einbringen von Abschnitten in ein bereits verbundenes System. Dabei umfasst das Einbinden unter anderem die Schritte des Ausrichtens der zu verbindenden Abschnitte zueinander und das Herstellen einer Schweißverbindung. Entsprechende Verfahren sind aus dem vorgenannten Druckschriften bekannt. Diese aus dem Stand der Technik gekannten Verfahren und Vorrichtungen eignen sich jedoch nicht, um Rohrabschnitte zwischen zwei getrennte Rohrleitungsenden einzufügen.

Unter den einzubindenden Abschnitten sind dabei Rohrleitungen, aber auch sonstige Einrichtungen wie z.B. Anlagen, Abzweige, T-Stücke, Testeinrichtungen etc. zu verstehen.

Bei der Verlegung einer Rohrleitung (Pipeline) über weite Distanzen, wie sie beispielsweise beim Transport von Erdgas für die Gasversorgung verwendet werden, kann ein Anteil der erforderlichen Verbindungen bereits beim Verlegen eines weiteren Rohabschnitts am vorderen Rohrleitungsende erfolgen, also von der primären Verlege- und Schweiß-Mannschaft erledigt werden (Firing Line Joints). Diese Mannschaften können jedoch nicht sämtliche Verbindungen herstellen, wofür oft unterschiedliche Gründe vorliegen. Beispielhafte seien Vorgaben des Geländes, z.B. Straßen oder Flußquerungen, Senken oder auch unterirdische Versorgungsleitungen genannt. Andere Gründe sind kompliziert zu bearbeitende Richtungsänderungen der Leitung oder die Installation von Prüfeinrichtungen für Druckprüfungen (Hydrotest Einrichtung) in Leitungsabschnitte. Vereinzelt müssen auch zunächst fehlerhaft hergestellte Verbindungen erneut bearbeitet werden. Jedoch können Verzögerungen aufgrund der damit verbundenen erheblichen Kosten bei der vorderen Verlege-Mannschaft regelmäßig nicht in Kauf genommen werden. Diese und andere Gründe führen dazu, dass einige Verbindungen von der Verlege-Mannschaft unbearbeitet zurückgelassen werden. Es bleiben also einigen Abschnitte "offen", die dann eingebunden werden müssen

Die Verbindung von Leitungssektionen im Endabschnitt der gesamten Leitung, also dort, wo die Mannschaft mit der Verlegung der Leitungen beschäftigt ist, gestaltet sich üblicherweise unproblematisch. An diesen Bearbeitungsorten kann auch automatisierte Ausrüstung zum Einsatz kommen. Die Bearbeitung gestaltet sich insbesondere deshalb einfacher, da sich die Rohrleitungen meist noch oberhalb der Oberfläche befinden und daher einfach zugänglich sind. Ferner können Bearbeitungsschritte auch innerhalb der Rohrleitung vorgenommen werden, um z.B. Schweißungen von innen vorzunehmen oder innere Klemmen zur Ausrichtung zu verwenden. Dies ist möglich, da das Ende des Rohrleitungsabschnittes offen ist und die Ausrüstung daher problemlos wieder aus der Rohrleitung entfernt werden kann.

Werden Leitungssektionen jedoch fern der Enden der Gesamtrohrleitung eingebunden, gestaltet sich dieser Vorgang deutlich komplizierter. Oft sind die Rohrleitungen in diesen Abschnitten bereits unterhalb der Oberfläche verlegt und nur in einem Abschnitt um die Einbindungsstelle herum freigelegt. Im Bereich der Einbindung ist in radialer Richtung der Rohrleitungen ein Arbeitsbereich (Einbindegrube) zu bilden, um zumindest einen gewissen Arbeitungs- und Manövrierbereich für die Rohrenden bereitzustellen.

Die Leitungseinbindung selbst wird in der Praxis dann mit Verfahren durchgeführt, die seit über 40 Jahren in nahezu unveränderter Form Anwendung finden. Es sind somit ausschließlich manuelle Arbeitsschritte mit sehr großem Personalaufwand bei der Einbindung erforderlich.

Dieser Ablauf lässt sich durch die folgenden Schritte grob veranschaulichen: Zunächst ist der Bereich um die Einbindung vorzubereiten, also in ausreichender Weise freizulegen, seitlich zu erweitern und zu sichern; Anschließend müssen die Leitungsabschnitte (Rohrleitungen mit Nennweiten bis DN 1400) durch Zugvorrichtungen, wie Kranausleger oder andere Arten von Hebezeugen zueinander in Ausrichtung gezogen werden; Die Rohre werden dann markiert, an passender Stelle getrennt, manuell aufgemessen, erneut ausgerichtet, fein justiert, zentriert und verschweißt; Nach dem Prüfen der Verbindung wird die Einbindungszone der Rohrleitung umhüllt.

Bei den Schritten den Feinjustierens und Zentrierens tritt dabei regelmäßig das Problem auf, dass die Rohre jeweils in Ihren Abmaßen von einer idealen zirkularen Form abweichen, d.h. sie haben zu große Ovalitäten. Dies wird verständlicher, wenn berücksichtigt wird, dass die Abweichungstoleranzen von einer Kreisform grundsätzlich von Produzenten eines Rohres nur an den Rohrenden garantiert und gewährleistet sind. Wird jedoch ein Rohr gekürzt, so kann es sein, dass die Toleranzen zwar an dem ursprünglichen Rohrende erfüllt waren, an dem Schnittbereich (also in einem Mittelabschnitt) jedoch nicht mehr erfüllt sind. Daher wird vor dem Verschweißen der Rohre eine Schelle (Klemme) um die aneinander ausgerichteten Rohrenden gelegt, mit welcher die Rohre vor dem Verschweißen in eine Form innerhalb der Toleranzen gezwungen werden. Der Platzbedarf bei Anordnung dieser Klemme ist ein Grund dafür, dass kaum automatisiertes Schweißequipment eingesetzt werden kann und die Schweißung meist manuell durchgeführt werden muss. Die Klemme belegt den Bereich um die zu verbindenden Endabschnitte.

Es ist allgemein anerkannt, dass die Kosten solcher Einbindungsvorgänge einen erheblichen Teil der allgemeinen Kosten für die Verlegung von Rohrleitungen ausmachen, da sie ein Vielfaches der Zeit und Kosten einer Verbindung am vorderen Ende der Gesamtleitung erfordern. Dies ist anhand des oben beschriebenen Aufwands verständlich und wird noch deutlicher, wenn berücksichtigt wird, dass die mit derartigen Verfahren einzubindenden Leitungen einen erheblichen Durchmesser und entsprechende Wanddicke aufweisen (beispielsweise Leitungen bis zu einem Nenndurchmesser von 1200 mm = 48 Zoll). Allein beim Schweißen einer Schweißnaht sind 3 bis 4 Schweißer bis zu 4 Stunden beschäftigt, während gleichzeitig die bearbeiteten Rohre in Position gehalten werden müssen.

Schließlich sind derartige Einbindevorgänge mit erheblichen Risiken für die Arbeiter verbunden, was sich aus der vorstehenden Beschreibung ohne weiteres ergibt. Es besteht daher ein erheblicher Bedarf für eine Verbesserung der verfügbaren Hilfsmittel für derartige Einbindungen und entsprechende Verfahren.

*Der Erfindung liegt die Aufgabe zugrunde, ein Einbinden* von Rohrleitungssektionen in Rohrleitungssysteme, insbesondere in Fernleitungssysteme zu verbessern.

Diese Aufgabe wird erfindungsgemäß gelöst durch eine Vorrichtung zum Einbinden von Rohrleitungen gemäß Patentanspruch 1 sowie ein Verfahren zum Einbinden von Rohrleitungen gemäß Patentanspruch 11.

Die erfindungsgemäße Vorrichtung, die beim Einbinden von Rohrleitungen verwendet wird, weist zwei erste Schellen auf, die jeweils aus mehreren gekoppelten Umfangssektionen (bzw. Umfangssegmenten) bestehen. Die Umfangssektionen sind zum voll umfänglichen Umgreifen einer Rohrleitungen gegeneinander bewegbar. An jeder der ersten Schellen sind Klemmmittel zum einklemmen einer Rohrleitung angeordnet. Die Klemmmittel ermöglichen ein Einklemmen an Klemmstellen oder Klemmpunkten entlang einer Umfangslinie der umgriffenen Rohrleitung. Mit wenigstens einer der ersten Schellen ist ein Werkzeugträger gekoppelt, wobei der Werkzeugträger mehrteilig an den Umfangssektionen einer der äußeren Schellen derart ausgebildet, so dass er nach Bewegen bzw. Schwenken der Umfangssektionen zum Umgreifen eines Rohres um das Rohr umläuft.

Zwischen den ersten Schellen erstrecken sich Abschnitte von zwei Holmen, wobei an den Holmen die beiden ersten Schellen gehalten sind. Hydraulikmittel sind mit den ersten Schellen und den Holmen zum Bewegen der ersten Schellen in einer axialen Richtung der Holme gekoppelt. Zwischen den ersten Schellen sind zweite Schellen vorgesehen, die an wenigstens zwei der Holme gehalten sind. An den zweiten Schellen sind Klemmmittel zum Einklemmen einer umgriffenen Rohrleitung angeordnet sind.

Die ersten Schellen sind üblicherweise in der Nähe der beiden Enden der Holme angeordnet, die zweiten Schellen entsprechend an den sich zwischen den ersten Schellen erstreckenden Mittelabschnitten der Holme. Die ersten Schellen werden auch als äußere Schellen, die zweiten Schellen als innere Schellen bezeichnet.

Die inneren (zweiten) Schellen können verwendet werden, um das zwischen die von den äußeren (ersten) Schellen gehaltenen Rohrleitungsenden einzufügende Passstück zu halten, zu zentrieren und zu den äußeren Rohrleitungsenden auszurichten. Dadurch, dass die inneren Schellen an wenigstens zwei derjenigen Holme gehalten sind, an denen auch die äußeren Schellen gehalten sind, sind die inneren Schellen (und mit ihnen das gehal*tene Zwischenstück*) *zu der gesamten Vorrichtung und* den äußeren Schellen ausgerichtet. Alle Bestandteile, die Holme, die äußeren Schellen (und die darin gehaltenen Rohrenden) und die inneren Schellen (und das darin gehaltene Zwischenstück), stehen zueinander in einer festen Ausrichtung, was die Bearbeitung fixierter Rohre erleichtert. Die inneren Schellen können einen ähnlichen Aufbau wie die äußeren Schellen aufweisen, sie können demnach beispielsweise auch mit einem Werkzeigträger ausgestattet sein. Die Klemmmittel der inneren Schellen sind ähnlich oder identisch denen der äußeren Schellen aufgebaut. Sie können jedoch unabhängig zum Klemmen betätigt werden und auch einen im Detail anderen Aufbau aufweisen, wie z.B. abweichende Anzahl von Klemmstellen am Rohr.

Die ersten Schellen der Vorrichtung übernehmen mehrere Funktionen. Zunächst dienen die ersten Schellen als Zentrierschellen. Sind die Umfangssektionen der ersten Schellen gegeneinander in eine geöffnete Stellung bewegt, so kann die so geöffnete Schelle an eine Rohrleitung heranbewegt werden und die Umfangssektionen werden zum voll umfänglichen Umgreifen einer Rohrleitung gegeneinander bewegt. Die Schelle erstreckt sich dann entlang einer vollen Umfangslinie um die Rohrleitung. Wie viele Umfangssektionen sinnvoll oder erforderlich sind, ist in insbesondere in Abhängigkeit von den zu erwartenden Umgebungsbedingen und den zu bearbeitenden Rohrleitungen zu entscheiden. Um eine Öffnung der Schellen überhaupt zu gewährleisten sind wenigstens zwei Umfangssektionen erforderlich.

Der Innendurchmesser einer in die geschlossene Stellung bewegte Schelle ist derart an die Rohrleitung angepasst, dass die Rohrleitung bereits beim Umgreifen grob in der Schelle zentriert ist. Dazu kann die von den Umfangssektionen gebildete innere Öffnung zu Aufnahme der Rohrleitung eine Kreisform annehmen, es sind jedoch auch andere Formen, wie z.B. regelmäßige Vielecke möglich.

An jeder Schelle sind Klemmmittel angeordnet, um die Rohrleitung in der Schelle, nach dem Umgreifen, zu klemmen oder einzuspannen. Die Klemmmittel können sich beispielsweise beim Umgreifen in einer zurückgezogenen Stellung befinden und noch nicht in Kontakt zu der Rohrleitung treten und erst nach dem umfänglichen Umgreifen der Rohrleitung und einer ersten Zentrierung durch die Schellen und ggf. einer Sicherung der Schelle gegen Öffnung zum Klemmen oder Einspannen der Rohrleitung bewegt werden. Als Klemmmittel kommen dafür insbesondere hydraulische Klemmmittel, jedoch auch elektrisch oder manuell betätigte Klemmmittel in Frage.

Mit wenigstens einer der ersten Schellen ist ein Werkzeugträger gekoppelt, wobei der Werkzeugträger mehrteilig an den Umfangssektionen einer der äußeren Schellen derart ausgebildet, so dass er nach Bewegen bzw. Schwenken der Umfangssektionen zum Umgreifen eines Rohres um das Rohr umläuft. Da die Rohrleitung in der Schelle umschlossen und mit Hilfe der Klemmmittel arretiert ist, ist eine reproduzierbare und verlässliche Ausrichtung eines an dem Werkzeugträger angeordneten Werkzeugs zu der Schelle und der darin gehaltenen Rohrleitung gewährleistet.

Die Holme, die sich zwischen den ersten Schellen erstrecken und an denen die Schellen gehalten sind, z.B. in Zentrierbuchsen gelagert oder durch entsprechende Einrichtungen geführt sind, gewährleisten eine Ausrichtung der Schellen zueinander und die Einhaltung eines definierten Abstands und Winkels zwischen den Schellen und damit auch zwischen den darin umgriffenen und ggf. festgeklemmten Rohrleitungen. Es ist also möglich, die Schellen auf Abschnitte von einer oder mehreren Rohrleitungen aufzusetzen und diese jeweils zu umgreifen und mit Hilfe der Schellen in durch die Holme definiertem und gehaltenem Abstand einzuspannen oder einzuklemmen. Die Schellen sind auf den Holmen in axialer Richtung bewegbar, so dass ihr Abstand variiert werden kann. Zwischen den Schellen und den Holmen besteht eine kraftschlüssige Verbindung.

Durch Hydraulikmittel, welche mit den ersten Schellen und den Holmen zum Bewegen der ersten Schellen in axialen Richtung der Holme gekoppelt sind, können die Schellen und damit auch die in diesen Schellen eingeklemmten oder einspannten Rohrleitungen gegeneinander bewegt werden. Dadurch ist es beispielsweise möglich, gegenüberliegende Rohrenden, von denen jeweils eines in einer der Schellen eingespannt ist, hydraulisch auseinander zu drängen oder zueinander zu ziehen.

Unter anderem ist die erfindungsgemäße Vorrichtung geeignet, um einander gegenüberliegende Rohrleitungsenden zueinander auszurichten. Der mit der Erfindung eröffnete erfindungsgemäße Weg des Einbindens von Rohrleitungen kann vom herkömmlichen Weg des Einbindens abweichen.

Erfindungsgemäß liegen sich die Rohrleitungsenden vor dem Einsatz der erfindungsgemäßen Vorrichtung beispielsweise grob ausgerichtet und mit einem gewissen Mindestabstand gegenüber. Diese grobe Ausrichtung ist innerhalb solcher Toleranzen zu gewährleisten, dass die Vorrichtung auf beide Enden aufsetzbar ist. Nach dem Greifen der Rohrleitungsenden sind diese in ihrer Lage zueinander fixiert und können zwischen den Schellen derart bearbeitet und getrennt werden, dass ein durch die Lage der Schellen auf den Holmen definierter Abstand der Rohrleitungsenden besteht. Der Aufwand, die Rohrleitungsenden in zueinander ausgerichteter Stellung zu halten wird gegenüber der Verwendung einer Mehrzahl an Hebezeugen reduziert. Ein bereits vorgefertigtes Zwischenstück mit passenden Abmessungen kann in diesen Zwischenraum eingesetzt werden, wobei die äußeren Rohrleitungsenden durch die Hydraulikmittel beim Einfügen des Zwischenstücks auseinandergedrängt werden können, um das Einsetzen zu erleichtern. Ein wesentlicher Vorteil besteht darin, dass die Rohrleitungen in einem definierten Abstand getrennt werden, so dass definierte Ausgangsbedingungen für das Einfügen eines Rohrleitungsbauteils oder Passstückes erreicht werden. Obwohl gemäß der Erfindung regelmäßig zwei Schweißverbindungen (an beiden Enden des Passstücks) vorzunehmen sind, reduzieren sich der Aufwand und das erforderliche Material beträchtlich. Passende Passstücke sind wegen der durch die Vorrichtung gewährleisteten geringen Toleranzen in erforderlicher Stückzahl vorab produzierbar. Außerdem ist die Ausrichtung der Rohrenden zueinander bei stabil eingespannten Rohrenden einfacher zu realisieren als mit manuell gesteuerten Hebezeugen oder Zugvorrichtungen.

Alternativ kann die Vorrichtung jedoch auch zum unmittelbaren Verbinden von Rohrenden, ohne Verwendung eines Passstücks eingesetzt werden. Auch in diesem Fall ist die Vorrichtung gewinnbringend einsetzbar, um die Rohrenden axial zueinander auszurichten, zu halten und in axialer Richtung zu bewegen.

Das Trennen der Rohrleitungen kann mit einem mit dem Werkzeugträger gekoppelten Gerät zum Trennen erreicht werden, welches beispielsweise um den Rohrleitungsabschnitt umläuft. Sofern an beiden Schellen Werkzeugträger angeordnet sind, ist auch ein automatisches Trennen der Rohrleitungen an beiden Stellen möglich. Auch sämtliche sonstigen Bearbeitungsschritte sind mit am Werkzeugträger gekoppelten Werkzeugen durchführbar.

Die Vorrichtung kann aus zwei Modulen bestehend aufgefasst werden, wobei das erste Modul aus den äußeren Schellen, daran angeordneten Klemmmitteln und Werkzeugträgern, den Holmen und den Hydraulikmitteln besteht. Das zweite Modul wird durch die inneren Schellen (mit Klemmmitteln etc.) gebildet, die zum entsprechenden Zeitpunkt mit dem ersten Modul gekoppelt werden. Die inneren Schellen können separat zueinander ausgebildet sein, sie können jedoch auch durch weitere Holme miteinander verbunden sein, so dass sie in einem konstanten Abstand gehalten sind.

Die Halterung der inneren Schellen an zwei der Holmen zwischen den äußeren Schellen kann fest oder lösbar ausgebildet sein. Beispielsweise können die inneren Schellen derart auf das erste Modul aufsetzbar sein, dass die Schellen mit entsprechenden Mitteln auf den Holmen aufliegen, also "aufgesattelt" werden. Alternativ können die inneren Schellen beispielsweise Führungen aufweisen und auf den Holmen verschieb- oder verfahrbar ausgebildet sein. Im letztgenannten Fall können die inneren Schellen zum Einsetzten des Passstücks beispielsweise seitlich, jeweils in Richtung einer der äußeren Schelle auf den Holmen bewegt werden und nach dem Einbringen des Passstücks oder Rohrleitungsbauteils über das positionierte Passstück oder Bauteil geschoben werden.

In einer bevorzugten Ausführungsform der Erfindung bestehen die äußeren Schellen aus jeweils zwei Umfangssektionen, die jeweils freie innere Kreissektoren zum Umgreifen eines Rohres aufweisen. Die Kreissektoren beider Umfangssektionen einer Schelle ergänzen sich dabei zu einer Vollkreisfläche.

Bei gegeneinander in eine Schließstellung bewegten Umfangssektionen einer Schelle ist innerhalb jeder Schelle eine Vollkreisfläche ausgebildet, in der ein Rohr umgreifbar gehalten sein kann. Sofern die innere Vollkreisfläche nur wenig größer als die zu greifende Rohrleitung ist, wird die Rohrleitung bereits beim Umgreifen für den Einsatz der Klemmmittel vorzentriert und (im Gegensatz zu einer freien Fläche in Form z.B. eines mehrseitigen Vielecks) gleichmäßig beansprucht.

Es ist vorteilhaft, wenn die Umfangssektionen der Schellen bewegbar sind, indem sie um eine gemeinsame Schwenkachse schwenkbar ausgebildet sind.

In diesem Fall ist beispielsweise die Anordnung von Stellmitteln, welche die Umfangssektionen gleichzeitig schwenken, in besonders einfacher Weise möglich. Die Schwenkachse kann beispielsweise so oberhalb der Schellen angeordnet sein, dass die in eine Öffnungsstellung geschwenkten Umfangssektionen der Schellen auf eine liegende Rohrleitung absenkbar sind. Die Schellen können, ähnlich wie eine geöffnete Zange oder Greifschaufel, über einem Rohrabschnitt abgesenkt und anschließend zum umgreifen in eine geschlossene Stellung geschwenkt werden. Die äußeren und inneren Schellen können jeweils abweichende zugeordnete Schwenkachsen aufweisen, es ist jedoch auch möglich alle Schellen um eine identische Schwenkachse schwenkbar auszubilden.

Vorzugsweise werden die Umfangssektionen jeder Schelle mit Hilfe von Schwenk-Hydraulikmitteln gegeneinander um die Schwenkachse geschwenkt.

Die Schwenkbewegung der Umfangssektionen ermöglicht bei entsprechender Ausbildung der Schellen mit Hebelarmen eine Öffnung oder Schließung der Schellen mit geringen Stellwegen der Hydraulikmittel. Außerdem ist der Raumbedarf für die derartige Vorrichtung geringer als bei Schellen, die durch eine rein translatorische Bewegung um das Rohr herumgelegt werden.

Der Werkzeugträger muss wenigstens zweiteilig ausgebildet sein, damit er um die Rohrleitung herum angeordnet werden kann. Beispielsweise ist es möglich, jeweils ein Halbteil an einer Umfangssektion einer der äußeren Schellen anzuordnen und nach dem Bewegen der Umfangssektionen in eine geschlossene und das Rohr umgebende Stellung die Halbteile für einen umlaufenden Verlauf des Werkzeugträgers zu verbinden. Eine solche Verbindung der Teile des Werkzeugträgers kann durch beliebige Verbindungsmittel, wie z.B. Stifte, Bolzen oder Schrauben erfolgen.

Vorzugsweise weist der werkzeugträger einen in zwei Halbkreisbögen geteilten Zahnkranz auf, wobei die Halbkreisbögen jeweils an eine der Umfangssektionen einer der äußeren Schellen angeordnet sind.

Die Halbkreisbögen des Zahnkranzes können Verbindungsmittel aufweisen, die dann, wenn die Halbkreisbögen zur Bildung eines vollen Zahnkranzes zusammen bewegt sind (und aneinander anliegen), eine Sicherung des Zahnkranzes unter Bildung einer festen Verbindung der Halbkreisbögen ermöglichen.

An dem vollen Zahnkranz entlang kann ein mit dem Werkzeugträger gekoppeltes Werkzeug um das Rohr herum bewegt werden. Es ist dann möglich, an den in der Vorrichtung gehaltenen und geklemmten Rohren unter Einhaltung einer definierten Bearbeitungsposition und unter Bewegung des Werkzeugs mit einer definierten Geschwindigkeit entlang des Umfangs des Rohres Bearbeitungen vorzunehmen.

Bezüglich der an den Schellen angeordneten Klemmmitteln ist es besonders vorteilhaft, wenn die Klemmmittel mehrere Presskissen aufweisen, die jeweils mit Press-Hydraulikmitteln gekoppelt sind und derart an den äußeren Schellen angeordnet sind, dass sie nach Schwenken der Umfangssektionen zum Umgreifen eines Rohres entlang einer Umfangslinie des Rohres angeordnet sind. Die Presskissen sind bezüglich des Rohres in radialer Richtung mit Hilfe der Press-Hydraulikmittel und zum kraftschlüssigen Halten des Rohres mit jeweils einstellbarer Anpresskraft gegen das Rohr bewegbar.

Die Klemm- oder Presskissen gewährleisten eine gleichmäßige Belastung des Rohrabschnitts an dem jeweiligen Klemmpunkt bzw. der Auflagefläche jedes Presskissens. Eine Beschädigung des Rohrabschnitts an dieser Stelle durch überhöhte Spitzenbelastungen wird durch die Presskissen vermieden. Es ist möglich, eine gleichmäßige Anordnung der Presskissen in einheitlichen Winkelabständen entlang einer Umfangslinie zu wählen, dies verhindert eine ungleichmäßige Kraftausübung auf den Rohrabschnitt während des Klemmvorgangs, da die Anpresskraft entlang einer Umfangslinie gleichmäßig verteilt ist (unter Umfangslinie ist hierbei die Schnittlinie einer zu der Rohrachse senkrechten Ebene mit dem Rohr zu verstehen). Andere Anordnungen der Presskissen, z.B. in ungleichmäßigen Winkelabständen sind jedoch ebenfalls denkbar. Press-Hydraulikmittel stellen die erforderlichen Presskräfte zur Verfügung. Die gegen einen Rohrabschnitt gepressten Presskissen halten das Rohr kraftschlüssig und sichern es gehen axiale Lageänderung.

Die Presskissen können jeweils mit einzelnen Press-Hydraulikmitteln gekoppelt sein oder es können Press-Hydraulikmittel jeweils mehreren Presskissen zugeordnet sein. Entsprechend ist eine individuelle Presskraftwahl für jedes Presskissen oder eine Wahl einer Presskraft für mehrere Presskissen möglich. Die Anpresskraft kann manuell geregelt werden oder es kann eine Steuerlogik verwendet werden. Die Presskissen sind derart ausgebildet, dass sie die erheblichen Anpresskräfte aufnehmen können. Als Material kommen beispielsweise Metalle oder auch Materialien mit hohem Reibungskoeffizienten in Frage, z.B. Materialien von Reibbelägen von Bremsen. Die Presskissen können in ihrem Profil an die Rohrkrümmung angepasst sein, um eine verbesserte Kraftverteilung zu ermöglichen.

Die Verstellung der Pressmittel in radialer Richtung des Rohres gewährleistet eine gleichmäßige Belastung des Rohres, ohne übermäßig Kräfte in Umfangsrichtung auszuüben oder Ovalitäten in dem Rohr zu begünstigen.

Die Presskissen und die Press-Hydraulikmittel können in dieser Konfiguration verwendet werden, um Ovalitäten im Rohr, also Abweichungen von einer Kreisform des Rohres, auszugleichen. In diesem Fall dienen die als Pressmittel ausgebildeten Klemmmittel einerseits zum Halten der Rohrabschnitte in geeigneter Ausrichtung zueinander und andererseits zur Gewährleistung einer an beiden Rohrleitungsenden angeglichenen Kreisform. Dieser Ausgleich von Ovalitäten erleichtert die Verbindung der Rohrleitungen und verbessert die Möglichkeit, ein vorbereitetes Zwischenstück zwischen die in die Kreisform verformten bzw. gezwungenen Rohrleitungsenden einzubringen. Um die Ovalitäten der Rohrleitungsenden auszugleichen, werden die Presskissen unter Ausübung einer jeweils zugeordneten Presskraft auf eine Kreislinie verformt (wobei ggf. Abweichungen innerhalb der Toleranzen in Kauf genommen werden). Dies geschieht üblicherweise, indem auf einen Bereich mit überhöhtem Abstand von der Rohrachse mehr Presskraft ausgeübt wird, als auf einen Presspunkt, der näher an der Rohrachse liegt.

Da die Ausübung der Presskraft jedoch meist axial beabstandet von dem tatsächlichen Rohrende erfolgt (z.B. im Abstand von ca. 50 cm, um beispielsweise am eigentlichen Rohrende einen Arbeitsbereich zum Schweißen oder zur Bearbeitung zugänglich zu halten und die Presskissen vor der Hitze beim Schweißen zu schützen), kann zum Erreichen eines Ausgleichs der Ovalitäten am Rohrende eine abweichende Einstellung des Anpressdrucks im Klemm- bzw. Pressbereich erforderlich sein. Rechnungen nach der Finite-Elemente-Methode zeigen, in welchem Abstand der Ovalitäts-Ausgleich stattfinden muss, um die zirkulare Form innerhalb der Toleranzen auch am Rohrende zu gewährleisten. Beispielsweise wurde die Rechnung mit einer 28 Zoll Rohrleitung mit 16 mm Wandstärke durchgeführt. Als auszugleichende Ovalität wurde angenommen, dass der größere Durchmesser der Rohrleitung 1 % größer als der Nominaldurchmesser des Rohres und der kleine Durchmesser 1 % kleiner als der Nominaldurchmesser des Rohres ist. Es hat sich gezeigt, dass mit üblichen technischen Mitteln entsprechende Kräfte realisierbar sind, um z.B. in einem Abstand von 50 cm vom Rohrende die Ovalitäten auszugleichen und die Abweichungen auch am Rohrende innerhalb der Toleranzen zu halten. Dabei ist zu beachten, dass der Reibungskoeffizient der Presskissen zu optimieren ist, um eine optimale Kraftübertragung und Wirkung zu ermöglichen, beispielsweise eignet sich ein Reibmaterial eines Bremsbelags als Material für die Presskissen.

Es besteht jedoch nicht zwangsläufig ein Gleichverhalten zwischen einer zirkularen Form am Ort, wo die Presskraft ausgeübt wird und dem axial beabstandeten Rohrende. Es kann daher erforderlich sein, dass die Anpresskraft der Presskissen derart einzustellen ist, dass im Pressbereich eine Ovalität vorliegt oder sogar gezielt erzeugt wird, am beabstandeten Rohrende die Ovalität dadurch jedoch ausgeglichen wird. Üblicherweise erfolgt daher eine Kontrolle der Ovalität am Rohrende, dort wo eine Schweißverbindung herzustellen ist, und die Anpresskräfte der Presskissen werden an der Klemmstelle so eingestellt, dass die Ovalität am Rohrende verschwindet.

Zur Ansteuerung der Klemmmittel sind beliebige manuelle oder automatisierte Verfahren denkbar. Beispielsweise kann die Form des Rohres manuell oder automatisch überprüft und die Klemmmittel anschließend entsprechend angesteuert werden. Alternativ kann ein automatischer Abgleich der Stellungen der Presskissen erfolgen. Beispielsweise können die Presskissen im unbelasteten Zustand auf eine Kreislinie (ohne Berührung des Rohres) justiert werden und ihre Verstelllage wird auf null gesetzt. Anschließend werden die Presskissen bis zum Erreichen einer Ziel-Anpresskraft alle um denselben Verstellweg in radialer Richtung verfahren, bis eine Ziel-Anpresskraft erreicht ist.

Der mögliche Ausgleich von Ovalitäten an der umgriffenen Rohrleitung macht eine weitere Anbringung einer Schelle oder Manschette zu diesem Zweck im Verbindungsbereich zwischen Rohrleitung und Zwischenstück überflüssig. Dies ist ein besonderer Vorteil gegenüber den Tie-In-Verfahren gemäß dem Stand der Technik, da dort der unmittelbare Verbindungsbereich durch eine entsprechende Manschette belegt ist, so dass nur manuelle Bearbeitungen, jedoch keine automatisierten Verfahren verwendbar sind.

Die Presskissen und ihre Hydrauliksysteme können so gekoppelt sein, dass ein gemeinsames Hydrauliksystem verwendet wird, wobei auf jedes Presskissen ein identischer Druck wirkt.

Vorzugsweise ist ein Montagerahmen vorgesehen, an dem die Vorrichtung gehalten ist, wobei der Montagerahmen auf einem Fahrzeug zu montieren ist.

Die Vorrichtung kann in den Montagerahmen eingesetzt oder in diesem aufgehängt werden, so dass sie stabil gelagert ist und mit Transportmitteln, wie z.B. Lasttransportern zum Einsatzort gebracht werden kann. Ein Ankoppeln von Hebemitteln an den Montagerahmen ist ebenfalls möglich. Die Vorrichtung kann für den Einsatz von dem Montagerahmen abgekoppelt werden. Ein an dem Fahrzeug angeordneter Ausleger kann zum Plazieren der Vorrichtung eingesetzt werden.

Alternativ ist eine Ausbildung des Montagerahmens denkbar, die ein Verbleiben des Rahmens an der Vorrichtung auch während des Einsatzes ermöglicht.

Das erfindungsgemäße Verfahren verwendet die oben beschriebene erfindungsgemäße Vorrichtung zum Einbinden von Rohrleitungen. Mit Hilfe von an den Schellen angeordneten Werkzeugträgern und an diesen gekoppelten Werkzeugen werden die Endabschnitte zwischen den Schellen in einem durch die Holme vorgegebenen Abstand getrennt. Ein in seiner Länge dem vorgegebenen Trennabstand angepasstes Zwischenstück wird mit zwei inneren Schellen umfasst und zwischen die äußeren Schellen eingebracht. Die inneren Schellen werden an wenigstens zwei der Holme gestützt und dabei werden die äußeren Schellen zusammen mit denen darin geklemmten Endabschnitten zur Einpassung und Ausrichtung ggf. hydraulisch ausgelenkt.

Die Erfindung wird im Weiteren anhand der in den beiliegenden Figuren gezeigten bevorzugten Ausführungsformen näher beschrieben.

In den Figuren zeigen:
Figur 1 eine perspektivische Ansicht einer erfindungsgemäßen Vorrichtung beim Umgreifen einer Rohrleitung;
Figur 2a eine der äußeren Schellen der Vorrichtung aus Figur 1 in separater Darstellung;
Figur 2b die Schelle aus Figur 2a mit freigelegtem Antrieb für einen Werkzeugträger;
Figur 3 eine perspektivische Ansicht eines Zahnkranzabschnitts eines in der Erfindung eingesetzten Werkzeugsträgers;
Figur 4 eine der inneren Schellen der erfindungsgemäßen Vorrichtung in separater Darstellung;
Figur 5a-5h eine schematische Ansicht einer Verwendung der Vorrichtung anhand eines erfindungsgemäßen Verfahrens.

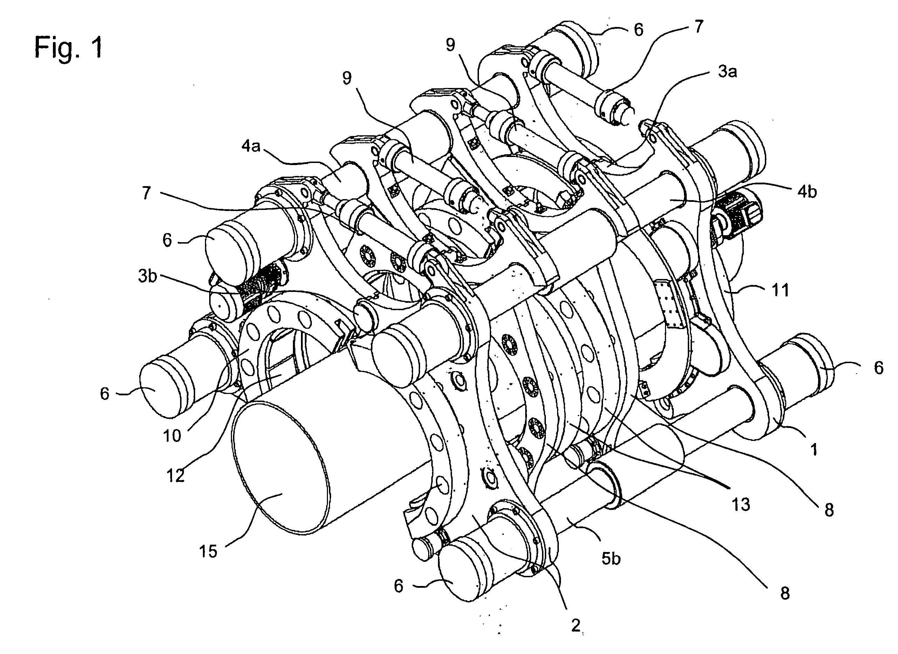

Die in Figur 1 gezeigte Vorrichtung zum Einbinden von Rohrleitungen weist zwei erste (äußere) Schellen 1 und 2 auf, die jeweils aus zwei Umfangssektionen bestehen. Die Umfangssektionen jeder Schelle 1, 2 sind jeweils in einem Gelenk an einer Schwenkachse schwenkbar mit Bolzen 3a bzw. 3b verbunden.

Zwischen den Schellen 1 und 2 erstrecken sich vier Holme, wobei zwei obere Holme 4a, 4b und zwei untere Holme 5a (verdeckt), 5b vorhanden sind. Die Holme erstrecken sich durch Ausnehmungen in den Schellen 1 und 2, in denen zur Aufnahme der Holme Zentrierbuchsen angeordnet sind. In den Endbereichen der Holme sind an den Schellen jeweils Hydraulikmittel 6 vorgesehen, um die Schellen 1 und 2 auf den Holmen über kurze Distanzen in axialer Richtung zu bewegen.

An den Umfangssektionen jeder Schelle sind jeweils weitere Hydraulikmittel 7 angeordnet, mit denen die Umfangssektionen um die durch die Bolzen 3a, 3b verlaufende Schwenkachse gegeneinander in eine geöffnete Stellung (wie in Figur 1) oder in eine geschlossene Stellung (nicht gezeigt) geschwenkt werden können.

In axialer Richtung der Holme zwischen den Schellen 1 und 2 sind zwei innere Schellen 8 angeordnet, die jeweils mit Hydraulikmitteln 9 zum Schenken ihrer Umfangssektionen gegeneinander um eine Schwenkachse gekoppelt sind. Die Schellen 1, 2, 8 und 9 sind derart angeordnet, dass sie eine gleich verlaufende Schwenkachse aufweisen. Außerdem liegen die Zentren des von ihnen jeweils umgriffenen Bereichs auf einer Achse, so dass mit den Schellen gehaltene Rohrabschnitte koaxial verlaufen.

Die inneren Schellen 8 liegen mit an den Schellen ausgebildeten Halteabschnitten auf den Holmen 4a, 4b derart auf, dass sie im geschlossenen Zustand nach oben zwischen den Holmen herausgehoben werden können. Sie sind im dargestellten angekoppelten Zustand auf die Holme aufgehängt oder aufgesattelt. Im Unterschied zu den äußeren Schellen 1, 2 weisen die inneren Schellen 8 keine Hydraulikmittel für eine Axialverstellung entlang der Holme auf.

An den äußeren Schellen 1, 2 sind Klemmmittel 10 bzw. 11 angeordnet, die in ihrem Inneren Presskissen 12 aufweisen. An den inneren Schellen 8 sind Klemmmittel 13 angeordnet, die einen gleichartigen Aufbau wie die Klemmmittel 10 und 11 aufweisen.

Den Klemmmitteln sind jeweils Kolben zugeordnet, die zur radialen Verstellung der Presskissen 12 verwendet werden können.

In Figur 1 ist die Vorrichtung in einem Zustand gezeigt, in dem die jeweiligen Umfangssektionen sämtlicher Schellen in eine geöffnete Stellung gegeneinander geschwenkt sind. Die Vorrichtung ist über ein Rohr 15 manövriert. In dieser Stellung können die Hydraulikmittel 7 und 9 zum Schwenken der Schellen in eine geschlossene Position betätigt werden. Das Rohr 15 wird dann vollständig umgriffen und die Schellen können durch Verriegelungsstifte oder Verriegelungsbolzen in dieser Stellung gegen unbeabsichtigte Öffnung (und zur Bereitstellung einer Gegenkraft zu der aufzubringenden Klemmkraft) gesichert werden. Anschließend werden die Klemmmittel 10, 11 und 13 betätigt, um das Rohr 15 mit Hilfe der Presskissen 12 in der Vorrichtung einzuklemmen bzw. einzuspannen. Dabei werden die Presskissen jeweils so angesteuert, dass sie nach dem Klemmvorgang auf einer Kreislinie an dem jeweiligen Rohrabschnitt anliegen. Dazu müssen ggf. entlang der Umfangslinie unterschiedliche Klemmkräfte ausgeübt werden, da das Rohr vor dem Einklemmen Ovalitäten aufweisen kann. Diese Ovalitäten werden beim Einklemmen ausgeglichen und das Rohr wird in eine Kreisform gezwungen.

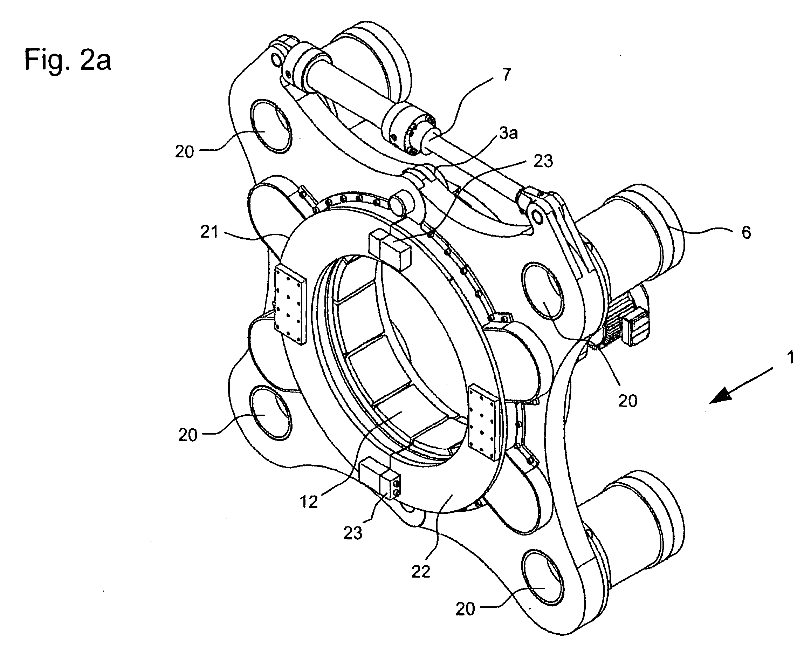

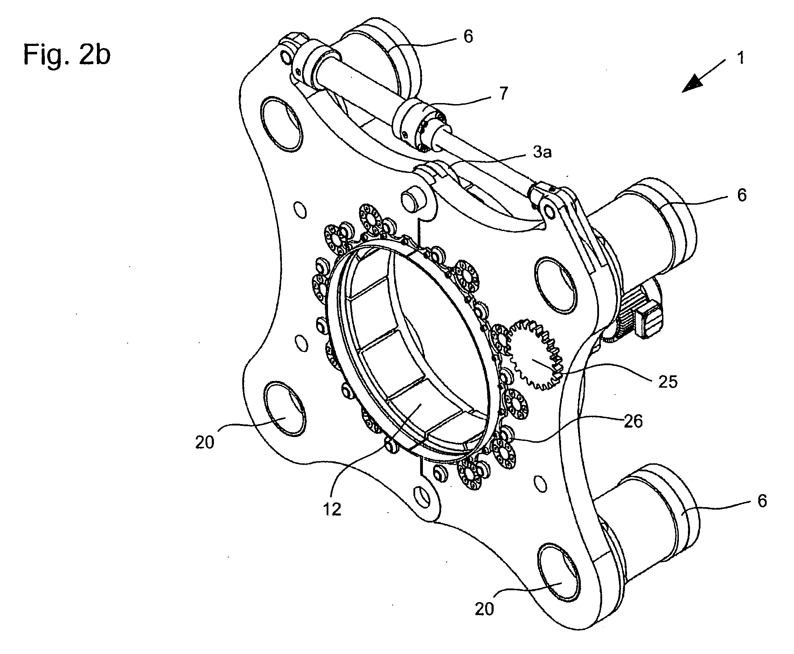

Die Figuren 2a und 2b zeigen die äußere Schelle 1 in separater Darstellung. In Figur 2a sind die Hydraulikmittel 6 und Aufnahmen 20 für die Holme 4a, 4b, 5a und 5b zu sehen. Ferner sind die Presskissen 12 gezeigt, die mit Hilfe von Hydraulikmitteln radial zur Rohrachse hin bewegbar sind. Ein Werkzeugträger 21 ist an der Schelle 1 angeordnet. In der gezeigten Stellung ist ein zweiteiliger Zahnkranz 22 mit Hilfe von Verbindungsmitteln 23 zu einem vollständigen Zahnkranz gekoppelt.

Figur 2b zeigt die Schelle 1, wobei Teile der Verkleidung des Werkzeugträgers und der Zahnkranz entfernt sind, um das Antriebssystem mit Antriebszahnrad 25 und Laufrollen 26 freizulegen. Mit Hilfe des Antriebssystems kann der Zahnkranz auf den Laufrollen bewegt und ein mit dem Zahnkranz gekoppeltes Werkzeug um das Rohr bewegt werden.

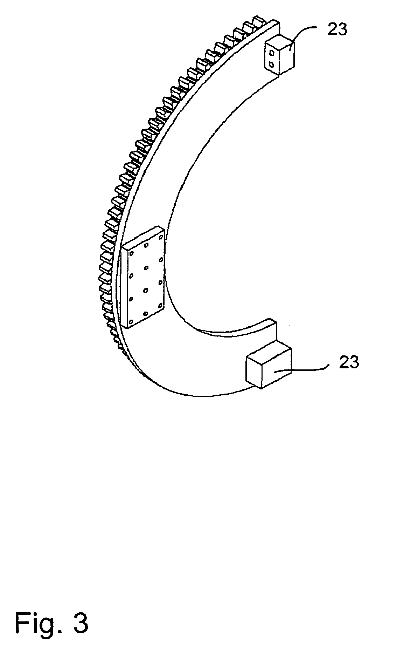

Einen 180° Abschnitt des Zahnkranzes 22 aus Figur 2a ist in Figur 3 gezeigt. Der Zahnkranz verfügt über Verbindungsmittel 23, mit denen die beiden Hälften zu einem vollen Zahnkranz verbindbar sind.

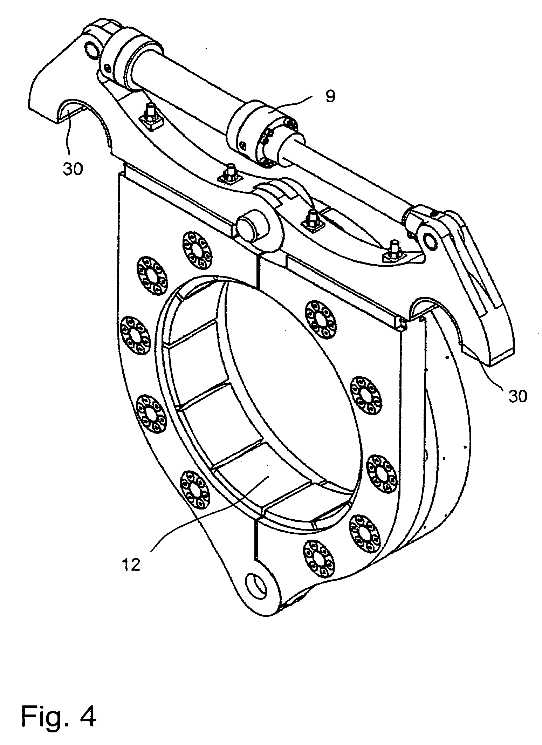

Figur 4 zeigt eine der inneren Schellen 8 in vergrößerter Darstellung. An der Schelle sind Lager 30 ausgebildet, die auf den Holmen zwischen den äußeren Schellen auflegbar sind. Durch diese Möglichkeit der Lagerung ist jederzeit eine Ausrichtung eines in den inneren Schellen getragenen Rohrabschnitts gewährleistet. Mit Hilfe von zwei der in Figur 4 gezeigten inneren (zweiten) Schellen kann ein vorbereiteter Rohrleitungsabschnitt umfasst und zwischen die getrennten Rohrleitungsenden, die in den äußeren Schellen eingeklemmt sind, abgesenkt werden. Die inneren Schellen bilden dann mit dem vorbereiteten Rohrabschnitt ein Modul, welches mit der Vorrichtung zum Einbringen des Zwischenstücks gekoppelt wird. Die in Figur 4 gezeigte Schelle weist Presskissen auf, die in der Lage sind, eventuelle Ovalitäten eines vorbereiteten Zwischenstücks auszugleichen, indem die Presskissen auf eine den nominalen Umfang des Rohrabschnitts entsprechende Kreislinie gebracht werden.

Anhand der schematischen Darstellungen 5a bis 5h wird ein Einsatz der erfindungsgemäßen Vorrichtung und des erfindungsgemäßen Verfahrens an einem Ausführungsbeispiel erläutert.

Im linken Teil der Figuren ist jeweils eine Seitenansicht aus radialer Richtung der Rohrleitung gezeigt. Im rechten Teil der Figuren ist jeweils derselbe Verfahren- bzw. Arbeitsschritt in einer Ansicht aus axialer Rohrrichtung zu sehen.

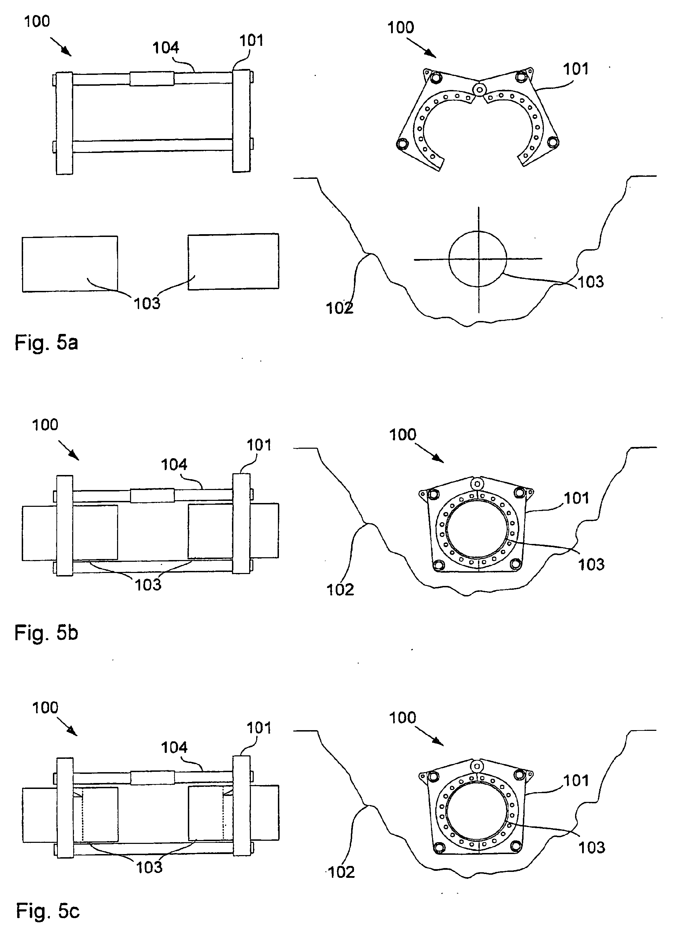

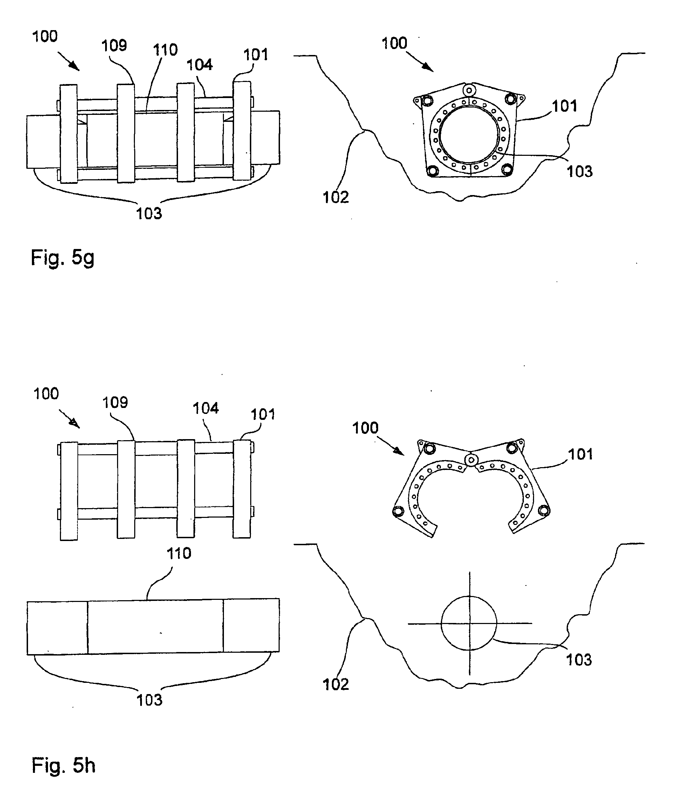

Wie in Figur 5a dargestellt, befindet sich zunächst die erfindungsgemäße Vorrichtung 100 oberhalb der einzubindenden Rohrenden 103. Um die Rohrenden herum ist eine Grube 102 ausgehoben. Die äußeren Schellen 101 der Vorrichtung 100 sind gegeneinander in eine offene Stellung geschwenkt. Aus der gezeigten Stellung wird die Vorrichtung 100 auf die Rohrenden 103 angesenkt, so dass die beiden Umfangssektionen der Schellen 101 die Rohrenden 103 jeweils umgreifen. Die Schellen 101 werden dann in eine geschlossene Stellung geschwenkt, so dass das Rohr 103 umfänglich umgriffen ist. An jedem der Rohrenden 103 ist eine der Schellen angeordnet. Die Schellen 101 werden durch die vier Laufholme in konstantem Abstand gehalten. Die Holme überbrücken den freien Bereich zwischen den Rohrenden.

In der in Figur 5b gezeigten Stellung werden die an den Schellen 101 befindlichen Klemmmittel betätigt und die Rohrenden 103 in den Schellen 101 umfänglich einklemmt. Dadurch werden die Rohrenden 103 in ihrer Ausrichtung zueinander arretiert und Ovalitäten der Rohrenden werden durch die Klemmmittel ausgeglichen. Der Ausgleich der Ovalitäten kann automatisiert oder durch manuelle Regelung erfolgen.

An den Schellen 101 ist jeweils ein Werkzeugträger angeordnet, mit dem ein Trennwerkzeug gekoppelt wird. Wie in Figur 5c gezeigt, laufen die Trennwerkzeuge umfänglich an dem Werkzeugträger geführt um das Rohr um und trennen die Rohrenden in einem definierten Abstand, in dem sie durch die Holme gehalten sind (siehe gestrichelte Linie in Figur 5c).

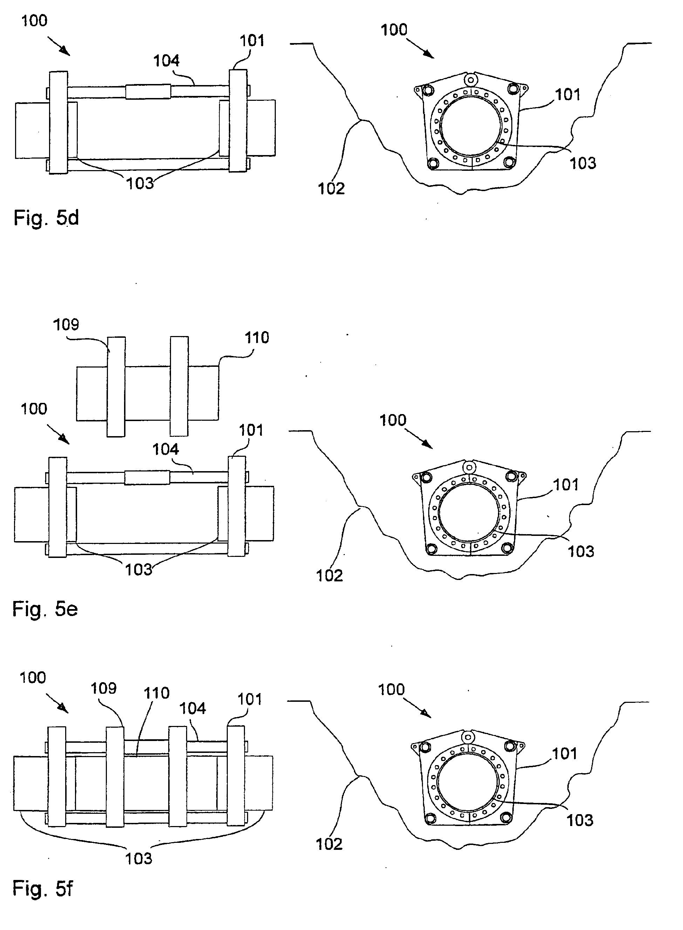

Die abgetrennten Rohrenden werden von den in den Schellen 101 gehaltenen Rohrleitungen entfernt, wie in Figur 5d gezeigt. In dem erreichten Zustand liegen zwei in der erfindungsgemäßen Vorrichtung gehaltene Rohrenden vor, die in einem definierten Abstand getrennt sind und einen kreisrunden Verbindungsquerschnitt aufweisen.

Wie in Figur 5e gezeigt, wird ein durch zweite Schellen 109 gehaltenes Zwischenstück 110, welches vorab auf den Trennabstand angepasst wurde, zwischen die in den äußeren Schellen gehaltenen Rohrleitungen abgesenkt. Die inneren Schellen 109 weisen Auflageflächen auf, die auf den Holmen 104 aufgelegt werden und das Zwischenstück bzw. Passstück 110 entsprechend ausrichten. Zum Einbringen des Passstücks können die äußeren Schellen mit ihren Hydraulikmitteln entlang der Holme bewegt werden. Dabei bewegen die Schellen die in ihnen fixierten Rohrenden mit. Es ist möglich, den freien Bereich zwischen den Rohrenden zeitweise zu erweitern, um ein Passstück oder Rohrleitungsbauteil einfacher einbringen zu können. Zu diesem Zweck "stauchen" die Hydraulikmittel die beiden Rohre im elastischen Bereich und zwingen so die Rohrenden auseinander. Wenn das Zwischenstück eingebracht und ausgerichtet ist, können die Rohrenden wieder aufeinander zu bewegt werden.

In Figur 5f ist der Zustand gezeigt, in dem die äußeren Rohrenden 103 von den äußeren Schellen 101 gehalten sind, während das Zwischenstück 110 von den Schellen 109 gehalten ist. Die Schellen 109 wiederum liegen auf den Holmen zwischen den äußeren Schellen auf. Die Rohrleitungsenden und das Zwischenstück sind zueinander mit Hilfe der erfindungsgemäßen Vorrichtung ausgerichtet. Etwaige Ovalitäten der Rohrleitungen werden durch Klemmmittel an den jeweiligen Schellen ausgeglichen.

Mit Hilfe von an den Werkzeugträgern an den äußeren Schellen 101 angeordneten Schweißmitteln wird eine Schweißverbindung zwischen dem Mittelstück 110 und den Rohrleitungsenden 103 hergestellt. Alternativ kann dieser Schweißschritt auch manuell ausgeführt werden. In jedem Fall wird die Herstellung einer Schweißverbindung durch den Ausgleich der Ovalitäten der Rohrleitungen und wegen der freien Zugänglichkeit der Schweißnaht gegenüber den bisher üblichen Verfahren erheblich verbessert.

Nachdem die Rohrleitungen verbunden wurden, wird die erfindungsgemäße Vorrichtung 100 in eine geöffnete Stellung geschwenkt und von der verbundenen Rohrleitungssektion abgehoben. Alternativ kann vor diesem Schritt über mit dem Werkzeugträger an den Schellen gekoppelte Mittel eine Überprüfung der Schweißnaht, z.B. durch Ultraschallmittel oder andere geeignete Diagnostikmittel, durchgeführt werden.

Das geschilderte Verfahren und die erfindungsgemäße Vorrichtung sind auch vorteilhaft anwendbar, wenn in eine durchgehende Rohrleitung ein Zwischenstück einzubringen ist. Beispielsweise kann auch eine fehlerhafte Schweißverbindung oder Leckstelle mit Hilfe der Vorrichtung repariert werden, indem die Vorrichtung an entsprechender Stelle aufgesetzt, der schadhafte Bereich herausgetrennt und ein schadloser Abschnitt eingesetzt wird. Weitere Anwendungsmöglichkeiten sind beispielsweise Einbringung oder Entfernung von Testabschnitten oder Abzweigungen (T-Stücke) in Rohrleitungen.

## Patentansprüche

1. Vorrichtung zum Einbinden von Rohrleitungen in ein erd-oder wasserverlegtes Rohrleitungstransportsystem mit
- zwei ersten Schellen (1, 2, 101), die jeweils aus mehreren gekoppelten Umfangssektionen bestehen, wobei die Umfangssektionen zum vollumfänglichen Umgreifen einer Rohrleitung (15) gegeneinander bewegbar sind,
wobei an jeder der ersten Schellen (1, 2, 101) Klemmmittel (10, 11) angeordnet sind, zum Einklemmen einer Rohrleitung (15) an Klemmstellen entlang einer Umfangslinie des Rohres,
wobei mit wenigstens einer der ersten Schellen (1, 2, 101) ein werkzeugträger (21) gekoppelt ist, wobei der Werkzeugtrager (21) mehrteilig an den Umfangssektionen einer der ersten Schellen (1, 2, 101) derart ausgebildet ist, daß er nach Schwenken der Umfangssektionen zum Umgreifen eines Rohres (15) um das Rohr umläuft
- wenigstens zwei Holmen (4a, 4b 5a, 5b), die sich zwischen den ersten Schellen (1, 2, 101) erstrecken und an denen die ersten Schellen axial bewegbar gehalten sind, und
- Hydraulikmitteln (6), welche mit den ersten Schellen (1, 2, 101) und den Holmen (4a, 4b, 5a, 5b) zum Bewegen der ersten Schellen in axialer Richtung der Holme gekoppelt sind, und
- mit zweiten Schellen (8, 109), die zwischen den ersten Schellen (1, 2, 101) an wenigstens zwei der Holme (4a, 4b, 5a, 5b) gehalten sind,
wobei an den zweiten Schellen (8, 109) Klemmmittel (13) zum Einklemmen einer umgriffenen Rohrleitung angeordnet sind.

2. Vorrichtung nach Anspruch 1, **dadurch gekennzeichnet, daß** die ersten Schellen (1, 2) aus jeweils zwei Umfangssektionen bestehen, die jeweils freie innere Kreissektoren zum Umgreifen eines Rohres aufweisen, wobei sich die Kreissektoren beider Umfangssektionen einer Schelle zu einer Vollkreisfläche ergänzen.

3. Vorrichtung nach Anspruch 2, **dadurch gekennzeichnet, daß** die Umfangssektionen der ersten und/oder zweiten Schellen (1, 2, 8) um eine gemeinsame Schwenkachse (3a, 3b) schwenkbar sind.

4. Vorrichtung nach Anspruch 3, **dadurch gekennzeichnet, daß** die Umfangssektionen der ersten und/oder zweiten Schellen (1, 2; 8) mit Schwenk-Hydraulikmitteln (7, 9) verbunden und mit Hilfe der Schwenk-Hydraulikmittel gegeneinander um die Schwenkachse (3a, 3b) schwenkbar sind.

5. Vorrichtung nach Anspruch 4, **dadurch gekennzeichnet, daß** der Werkzeugträger (21) einen in zwei Halbkreisbögen geteilten Zahnkranz (22) aufweist, wobei die Halbkreisbögen jeweils an einer der Umfangssektionen einer der ersten Schellen (1, 2) angeordnet sind.

6. Vorrichtung nach Anspruch 5, **dadurch gekennzeichnet, daß** an jeder der ersten Schellen ein Werkzeugträger (21) angeordnet ist.

7. Vorrichtung nach Anspruch 5 oder 6, **dadurch gekennzeichnet, daß** mit wenigstens einem Werkzeugträger (21) eine Schweißvorrichtung und/oder ein Schnittwerkzeug, ein Sägewerkzeug, ein Anphasewerkzeug, eine Prüfvorrichtung oder eine Nachumhüllungsvorrichtung gekoppelt ist.

8. Vorrichtung nach einem der Ansprüche 1 bis 7, **dadurch gekennzeichnet, daß** die Klemmmittel (10, 11) mehrere über den Umfang verteilte Presskissen (12) aufweisen, die jeweils mit Press-Hydraulikmitteln gekoppelt sind und derart an den ersten Schellen (1, 2) angeordnet sind, daß sie nach Schwenken der Umfangssektionen zum Umgreifen eines Rohres (15) entlang einer Umfangslinie des Rohres angeordnet sind, und
die Presskissen (12) bezüglich des Rohres in radialer Richtung mit Hilfe der Press-Hydraulikmittel und zum kraftschlüssigen Halten des Rohres mit jeweils einstellbarer Anpresskraft gegen das Rohr bewegbar sind.

9. Vorrichtung nach Anspruch 8, **dadurch gekennzeichnet, daß** die Press-Hydraulikmittel derart schaltbar sind, daß auf eine umfasste und mit den Presskissen (12) geklemmte Rohrleitung (15) von jedem Presskissen anpassbare Presskraft wirkt.

10. Vorrichtung nach einem der Ansprüche 1 bis 9, **dadurch gekennzeichnet, daß** ein Montagerahmen vorgesehen ist, an dem die Vorrichtung gehalten ist, wobei der Montagerahmen auf einem Fahrzeug zu montieren ist.

11. Verfahren zum Einbinden von Rohrleitungen in ein Rohrleitungstransportssystem unter Verwendung einer Vorrichtung nach einem der Ansprüche 1 bis 10, wobei mit den zwei ersten Schellen jeweils ein Werkzeugträger gekoppelt ist,
**dadurch gekennzeichnet, dass**,
mit Hilfe von den an den ersten Schellen (101) angeordneten Werkzeugträgern und an diesen gekoppelten Werkzeugen die einzubindenden Endabschnitte (103) der Rohrleitungen zwischen den ersten Schellen in einem durch die Holme (104) vorgegebenen Trennabstand getrennt werden, und ein in seiner Länge dem Trennabstand angepasstes Rohrleitungsbauteil (110) zur Verbindung der Rohrleitungen verwendet wird.

## Claims

1. Device for incorporating pipelines into a pipeline transport system laid underground or underwater, comprising
- two first clamps (1, 2, 101) which each comprise a plurality of coupled circumferential sections, wherein the circumferential sections can be moved with respect to one another in order to completely circumferentially enclose a pipeline (15),
wherein clamping means (10, 11) are arranged on each of the first clamps (1, 2, 101) and are intended for clamping a pipeline (15) at clamping points along a circumferential line of the pipe,
wherein a tool support (21) is coupled to at least one of the first clamps (1, 2, 101), wherein the tool support (21) is designed with a multi-part configuration on the circumferential sections of one of the first clamps (1, 2, 101) such that, after the circumferential sections have been pivoted to enclose a pipe (15), it extends peripherally around the pipe,
- at least two rails (4a, 4b, 5a, 5b) which extend between the first clamps (1, 2, 101) and on which the first clamps are held in an axially movable manner, and
- hydraulic means (6) which are coupled to the first clamps (1, 2, 101) and the rails (4a, 4b, 5a, 5b) in order to move the first clamps in the axial direction of the rails, and
- comprising second clamps (8, 109) which are held between the first clamps (1, 2, 101) on at least two of the rails (4a, 4b, 5a, 5b),
wherein clamping means (13) for clamping-in an enclosed pipeline are arranged on the second clamps (8, 109).

2. Device according to Claim 1, **characterized in that** the first clamps (1, 2) each comprise two circumferential sections which each have free inner circular sectors for enclosing a pipe, wherein the circular sectors of both circumferential sections of a clamp combine to form a full circular surface.

3. Device according to Claim 2, **characterized in that** the circumferential sections of the first and/or second clamps (1, 2, 8) can be pivoted about a common pivot axis (3a, 3b).

4. Device according to Claim 3, **characterized in that** the circumferential sections of the first and/or second clamps (1, 2; 8) are connected to hydraulic pivoting means (7, 9) and can be pivoted with respect to one another about the pivot axis (3a, 3b) with the aid of the hydraulic pivoting means,

5. Device according to Claim 4, **characterized in that** the tool support (21) comprises a toothed ring (22) divided into two semicircular arcs, wherein the semicircular arcs are each arranged on one of the circumferential sections of one of the first clamps (1, 2).

6. Device according to Claim 5, **characterized in that** a tool support (21) is arranged on each of the first clamps.

7. Device according to Claim 5 or 6, **characterized in that** a welding device and/or a cutting tool, a sawing tool, a bevelling tool, a testing device or a post-factory coating device is coupled to at least one tool support (21).

8. Device according to one of Claims 1 to 7, **characterized in that** the clamping means (10, 11) comprise a plurality of pressure pads (12) which are distributed over the circumference, these pressure pads each being coupled to hydraulic pressing means and being arranged on the first clamps (1, 2) in such a way that, after the circumferential sections have been pivoted to enclose a pipe (15), they are arranged along a circumferential line of the pipe, and the pressure pads (12) can be moved in a radial direction with respect to the pipe with the aid of the hydraulic pressing means and, to hold the pipe in a frictionally tight manner, can be moved against the pipe, each with an adjustable pressing force.

9. Device according to Claim 8, **characterized in that** the hydraulic pressing means can be activated such that each pressure pad exerts an adaptable pressing force on an enclosed pipeline (15) clamped by the pressure pads (12).

10. Device according to one of Claims 1 to 9, **characterized in that** a mounting frame on which the device is held is provided, wherein the mounting frame can be mounted on a vehicle.

11. Method for incorporating pipelines into a pipeline transport system using a device according to one of Claims 1 to 10, wherein a tool support is coupled to each of the two first clamps, **characterized in that**, with the aid of the tool supports arranged on the first clamps (101) and the tools coupled on said supports, the end sections (103) to be incorporated of the pipelines are separated, between the first clamps, at a separating distance predetermined by the rails (104), and a pipeline component (110) adapted in its length to the separating distance is used for connecting the pipelines.

## Revendications

1. Dispositif pour intégrer des conduites tubulaires dans un système de transport par conduites tubulaires enterré ou immergé, comprenant
- deux premiers colliers (1, 2, 101) qui sont constitués chacun de plusieurs sections périphériques accouplées, les sections périphériques pouvant être déplacées les unes par rapport aux autres pour venir en prise autour d'une conduite tubulaire (15) sur toute sa périphérie,
des moyens de serrage (10, 11) étant disposés sur chacun des premiers colliers (1, 2, 101), en vue du serrage d'une conduite tubulaire (15) au niveau de points de serrage le long d'une ligne périphérique de la canalisation,
un porte-outil (21) étant accouplé à au moins l'un des premiers colliers (1, 2, 101), le porte-outil (21) étant réalisé en plusieurs parties sur les sections périphériques de l'un des premiers colliers (1, 2, 101) de telle sorte qu'il tourne autour de la canalisation après le pivotement des sections périphériques pour venir en prise autour d'une canalisation (15),
- au moins deux longerons (4a, 4b, 5a, 5b) qui s'étendent entre les premiers colliers (1, 2, 101) et sur lesquels les premiers colliers sont maintenus de manière axialement déplaçable, et
- des moyens hydrauliques (6) qui sont accouplés aux premiers colliers (1, 2, 101) et aux longerons (4a, 4b, 5a, 5b) en vue du déplacement des premiers colliers dans la direction axiale des longerons, est
- comprenant des deuxièmes colliers (8, 109) qui sont maintenus sur au moins deux des longerons (4a, 4b, 5a, 5b) entre les premiers colliers (1, 2, 101),
des moyens de serrage (13) en vue du serrage d'une conduite tubulaire saisie sur son pourtour étant disposés sur les deuxièmes colliers (8, 109).

2. Dispositif selon la revendication 1, **caractérisé en ce que** les premiers colliers (1, 2) sont constitués chacun de deux sections périphériques qui comprennent chacune des secteurs de cercle intérieurs libres pour venir en prise autour d'une canalisation, les secteurs de cercle des deux sections périphériques d'un collier se complétant pour former une surface circulaire complète,

3. Dispositif selon la revendication 2, **caractérisé en ce que** les sections périphériques des premiers et/ou des deuxièmes colliers (1, 2, 8) peuvent être pivotées autour d'un axe de pivotement (3a, 3b) commun.

4. Dispositif selon la revendication 3, **caractérisé en ce que** les sections périphériques des premiers et/ou des deuxièmes colliers (1, 2 ; 8) sont reliées par l'intermédiaire de moyens hydrauliques de pivotement (7, 9) et peuvent être pivotées les unes par rapport aux autres autour de l'axe de pivotement (3a, 3b) à l'aide des moyens hydrauliques de pivotement.

5. Dispositif selon la revendication 4, **caractérisé en ce que** le porte-outil (21) comprend une couronne dentée (22) divisée en deux arcs en demi-cercle, les arcs en demi-cercle étant respectivement disposés sur l'une des sections périphériques de l'un des premiers colliers (1, 2).

6. Dispositif selon la revendication 5, **caractérisé en ce qu'**un porte-outil (21) est disposé sur chacun des premiers colliers.

7. Dispositif selon la revendication 5 ou 6, **caractérisé en ce qu'**un dispositif de soudage et/ou un dispositif de coupe, un dispositif de sciage, un dispositif de chanfreinage, un dispositif de contrôle ou un dispositif de gainage ultérieur sont accouplés à au moins un porte-outil (21).

8. Dispositif selon l'une quelconque des revendications 1 à 7, **caractérisé en ce que** les moyens de serrage (10, 11) comprennent plusieurs coussins de pressage (12) répartis sur la périphérie, lesquels coussins de pressage sont à chaque fois accouplés à des moyens hydrauliques de pressage et sont disposés sur les premiers colliers (1, 2) de telle sorte qu'ils soient disposés le long d'une ligne périphérique de la canalisation après le pivotement des sections périphériques pour venir en prise autour d'une canalisation (15), et les coussins de pressage (12) peuvent être déplacés par rapport à la canalisation dans la direction radiale à l'aide des moyens hydrauliques de pressage et peuvent être déplacés contre la canalisation par une force de pressage à chaque fois réglable en vue du maintien par engagement par force de la canalisation.

9. Dispositif selon la revendication 8, **caractérisé en ce que** les moyens hydrauliques de pressage sont connectables de telle sorte qu'une force de pressage ajustable par chaque coussin de pressage agisse sur une conduite tubulaire (15) entourée et serrée par les coussins de pressage (12).

10. Dispositif selon l'une quelconque des revendications 1 à 9, **caractérisé en ce qu'**il est prévu un cadre de montage sur lequel le dispositif est maintenu, le cadre de montage devant être monté sur un véhicule.

11. Procédé pour intégrer des conduites tubulaires dans un système de transport par conduites tubulaires en utilisant un dispositif selon l'une quelconque des revendications 1 à 10, un porte-outil étant accouplé à chaque fois aux deux premiers colliers,
**caractérisé en ce**
**qu'**à l'aide des porte-outils disposés sur les premiers colliers (101) et des outils accouplés à ces porte-outils, les tronçons d'extrémité (103) des conduites tubulaires qui doivent être intégrés sont séparés entre les premiers colliers suivant une distance de séparation prédéfinie grâce aux longerons (104), et un composant de conduite tubulaire (110), dont la longueur est ajustée à la distance de séparation, est utilisé en vue de la liaison des conduites tubulaires.
